# EUROPEAN PATENT SPECIFICATION

(11) **EP 3 291 143 B1**
(45) Date of publication and mention of the grant of the patent: **06.07.2022**
(21) Application number: 16740466.4
(22) Date of filing: 29.01.2016
(51) Int. Cl.: G06V 40/13

(54) **COMPACT SYSTEM FOR REGISTERING PAPILLARY RIDGE PATTERNS**
KOMPAKTES SYSTEM ZUR REGISTRIERUNG VON PAPILLÄREN GRATMUSTERN
SYSTÈME COMPACT D'ENREGISTREMENT DE DERMATOGLYPHES

(43) Date of publication of application: 07.03.2018
(73) Proprietor: "ABILMA" Limited Liability Company, Moscow 119331 (RU)
(72) Inventor: PRYTKOV, Anton Sergeevich, St. Petersburg 192283 (RU); LEYRIKH, Anatoly Andreevich, Moscow 125009 (RU)
(74) Representative: Hartvichova, Katerina
(86) International application number: PCT/RU2016/000032
(87) International publication number: WO 2016/118050

(56) References cited:
- RU-C1- 2 484 524
- US-A1- 2005 226 480
- US-A1- 2005 226 480
- US-A1- 2006 169 159
- US-B2- 7 567 342

## Description

### Field of Art

The invention relates to the area of biometrics, particularly to systems for the automatic recording of ridge patterns.

### Background Art

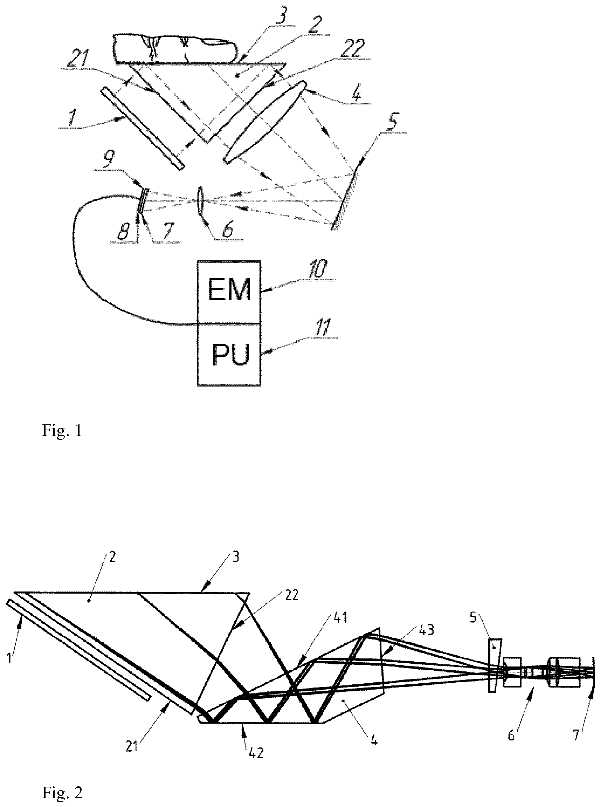

Figure 1 shows a diagram of a typical system for recording ridge patterns. A source of light 1 radiates onto a component 2 which determines the position of the reading surface 3 for the subject to be recorded, such as the ridge lines on the finger or the palm of the hand. On the reading surface, the luminous flux from the source of light ends up carrying an image of this ridge pattern on the basis of the differences in the reflection of areas corresponding to the troughs and peaks of the ridge pattern. The optical system, as a rule including a collecting lens 4, a system of mirrors 5, an objective lens 6, protective glass 7 and microlenses 8 over the image sensor, takes this flux and creates an image of the ridge pattern on the light-sensitive surface 9 of a multi-element image sensor. The image sensor converts the image from an optical image into an electronic digital image in the form of an array of intensity values proportional to the radiant flux incident on the corresponding light-sensitive element, and transmits this image to the electronic memory 10. The processing unit 11 standardizes the scale of this electronic image, thus creating the output image of the system.

The component, which determines the position of the subject to be recorded is, as a rule, designed as an optically transparent isosceles rectangular prism. However, there are variants in the design of the system for recording ridge patterns in which prisms of complex form, cylindrical components or plane-parallel plates act as the component determining the position of the reading surface. In rarer variants, the body element of the system is the component indicating the position of the reading surface.

The number of mirrors in the optical system may vary and determines the shape and overall dimensions of the system.

The radiation sensor, as a rule, is constructed as a bar or matrix of metal oxide semiconductor transistors or charge-coupled devices.

A common disadvantage of these systems is their considerable size. This is due to the fact that the optical axis preferably extends from the reading surface at an angle close to 45 °, and the objective lens for image formation of the required quality must be placed to a considerable distance from the reading surface. With the aim of bending the optical axis in order to reduce the overall dimensions of the system the mirrors are used.

At the same time, the widespread use of biometric identification and the increased requirements for reducing the scan time have recently led to the need for mobile scanners for fingerprints and palmprints with a large reading area whilst having a small thickness providing a comfortable portability.

However, this problem was not solved by using optical scanners, since any configuration of the mirrors did not allow an efficient deflection of the optical axis immediately after leaving the receiving element in a direction parallel to the reading surface, without detriment to the dimensions in a direction perpendicular to the reading surface. So, despite the rather successfully implemented reduction in the system size shown in US Pat. 8320645 dated 27.11.2012, IPC G06K9/00, it uses three mirrors and the height of the device (in the direction perpendicular to the reading surface) is significant.

There are a few variants for the design of systems for recording ridge patterns which bring about the required resolution and size of the reading area whilst having relatively low height.

Thus, US Pat. No. 5859420 dated 12.01.1999, classified under IPC G01B11/124, discloses a system in which the dimensions of the system for recording ridge pattern are reduced by replacing the receiving prism with a relatively thin ladder-type prism with several output facets, which refer to separate channels for forming parts of the registered object image, which are then combined into an output image.

This system is the closest analogue to the proposed invention. Despite the reduction in size, this layout increases the number of components in the system, which in turn increases the cost, reduces reliability and productivity, and also increases the power consumption of the device. Moreover, with this layout it is unavoidable to have the image distortion areas that correspond to the passage of rays through the boundaries of the prism steps, what is unacceptable in most applications of identification systems.

### Disclosure of the Invention

The object of the present invention is to provide a system for recording ridge patterns having small overall dimensions, high reliability and low cost while providing high- quality images, a high operating speed and reduced energy consumption.

### Substance of the Invention

Said object is achieved in that the system for recording ridge patterns includes a source of light, an element determining the position of the surface reading the ridge pattern, an optical system, a multi-element image sensor, wherein the reading surface is optically linked to the image receiver by rays passing through a guiding optical element, comprising a refractive surface and a reflective surface, by means of consecutive refraction on the refractive surface, reflection on the reflective surface and total internal reflection on the refractive surface.

To compensate for the chromatism that occurs in the guiding element, the optical system can use an optical wedge, preferably located in the optical path between the reading surface and the objective lens forming the image on the image receiver. Another option to compensate for the chromatism that occurs in the optical system is to arrange between the photosensitive surface of the image receiver and the objective lens that forms the image on this surface a transparent plate the surfaces of which are deflected from the normal line to the axis of the objective lens.

### Result of the Invention

The technical result provided by the set of listed features consists in decreasing the overall dimensions and increasing the reliability of a system for registering papillary ridge patterns, while providing for reduced cost, high image quality, rapid operating speed and reduced energy consumption.

### Description of the invention

An embodiment of the invention may be seen in the layout shown in Figure 2. A source of light, taking the form of a light panel 1 constructed as light-emitting diodes, shines on prism 2 made from optically transparent material. Passing through the input leg face of the prism 21, the light is incident at an angle of total internal reflection on the hypotenuse face 3, itself determining the ridge pattern reading surface. The subject to be recorded, such as the fingerprint or the palm of the hand, is placed on this surface. At the points corresponding to the peaks of the ridge pattern, the luminous flux from the light source is partially absorbed by the object to be recorded; in the remaining areas it is fully reflected by the hypotenuse face of the prism. In this way the luminous flux becomes a carrier of the image of the ridge pattern to be recorded. The light subsequently passes through the exit leg face 22 of the prism in the direction of the guiding element 4 made in the form of prism. Refracting at surface 41 light is reflected on surface 42, which is having a mirror coating and again arrives to surface 41. Since the light reflected on surface 42 falls on surface 41 at an angle of total internal reflection, it reflects without loss and leaves the guiding element through surface 43. Along with this, the working light areas on surface 41 intersect during the passage and reflection what is impossible when using a mirror system. Then the light passes through the optical wedge 5 that compensates for the chromatism that occurs after passing the guiding element. The objective lens 6 forms an image of the subject to be recorded on the light-sensitive surface 7 of the monochrome camera constructed as a matrix of transistors in a metal oxide semiconductor.

In another embodiment of the system, for all subject beams coming from the reading surface to the image receiver, the condition of total internal reflection on the surface 42 is satisfied. In this case, application of a mirror coating on the surface is not required.

In yet another variant embodiment of the invention, the subject beams coming from the reading surface to the image receiver pass through surfaces 22, 41 and 43 at an angle that is close to normal. In this case, there is no significant chromatic aberration at the output of the guiding element and the residual chromatism can be compensated for by the objective lens forming the image on the image receiver. For this purpose, the objective lens uses a lens in the form of meniscus of considerable thickness or an achromatic component consisting of two lenses with opposite signs of optical power and made of different materials. Another option to compensate for the chromatism that occurs in the optical system is to arrange between the photosensitive surface of the image receiver and the objective lens that forms the image on this surface a transparent plate, the surfaces of which are deflected from the normal line to the axis of the objective lens.

The applicants have manufactured several specimen ridge pattern scanners with a reading surface size of 82 x 82 mm and with a resolution on this surface equivalent to 500 dots per inch while the overall height of the device was less than 50 mm. A device with said parameters was the first known portable scanner of ridge pattern of four fingers, which has been able to produce an image quality complying with the FBI EBTS Appendix F standard. Experimental data confirmed that using the above-described guiding element, it is possible to produce systems for recording ridge patterns that significantly surpass the analogues in terms of overall dimensions.

Because of the fact that the guiding element represents a single structural component in which all the working surfaces are rigidly interconnected, the system improves image quality and reliability of operation in comparison to the systems in which reciprocal displacements of components can lead to deterioration of image characteristics.

Due to decreasing number of system components, reducing consumption of materials through decrease in overall dimensions, simplifying assembly and adjustment, leads to cost reduction of the devices.

Because of the fact that the system does not require to perform any software processing to combine several images from different channels into one output, the performance is increased and the power consumption of devices is reduced.

### Brief Description of Figures

The prior art and the essence of the invention are explained in the figures.
Figure 1 is a typical schematic diagram of the design of a ridge pattern recording system.
Figure 2 is a schematic diagram of a ridge pattern recording system having small dimensions owing to the use of a guiding element between the reading surface and the objective lens forming the image on the image receiver.

## Claims

1. A system for recording ridge pattern, comprising a light source (1), a prism (2) made from optically transparent material, which defines the position of a reading surface (3), an optical system, a multi-element image receiver and a guiding optical element (4) made in a form of prism, comprising a refractive surface (41), a reflective surface (42) and an output surface (43),
wherein
the reading surface (3) is optically linked to the image receiver such that rays passing from the light source (1) through the prism (2) and the guiding optical element (4) to the multi-element image receiver are consecutively refracted on the refractive surface (41), reflected on the reflective surface (42) and undergo a total internal reflection on the said refractive surface (41) before leaving the guiding optical element (4) through its output surface (43).

2. The system according to claim 1, **characterized in that** the optical system further comprises an optical wedge (5).

3. The system according to claim 2, **characterized in that** it further comprises objective lens (6) arranged such that the optical wedge (5) is located in the optical path between the reading surface (3) and objective lens (6) for forming the image on the multi-element image receiver.

4. The system according to claim 1, **characterized in that** between the photosensitive surface of the multi-element image receiver and the objective lens (6) that forms the image on this surface, a transparent plate is located, the surfaces of which are deflected from the normal line to the axis of the objective lens.

## Patentansprüche

1. System zur Aufzeichnung von Rillenmustern, umfassend eine Lichtquelle (1), ein Prisma (2) aus optisch transparentem Material, das die Position einer Lesefläche (3) definiert, ein optisches System, einen mehrelementigen Bildempfänger und ein optisches Führungselement (4) in Form eines Prismas, das eine Brechungsfläche (41), eine Reflexionsfläche (42) und eine Austrittsfläche (43) umfasst,
worin
die Lesefläche (3) optisch so mit dem Bildempfänger verbunden ist, dass Strahlen, die von der Lichtquelle (1) durch das Prisma (2) und das optische Führungselement (4) zum mehrelementigen Bildempfänger gelangen, werden nacheinander an der Brechungsfläche (41) gebrochen, an der Reflexionsfläche (42) reflektiert, und an der Brechungsfläche (41) einer inneren Totalreflexion unterzogen werden, bevor sie das optische Führungselement (4) durch seine Austrittsfläche (43) verlassen.

2. System nach Anspruch 1, **dadurch gekennzeichnet, dass** das optische System ferner einen optischen Keil (5) umfasst.

3. System nach Anspruch 2, **dadurch gekennzeichnet, dass** es ferner eine Objektivlinse (6) umfasst, die derart angeordnet ist, dass der optische Keil (5) befindet sich im Strahlengang zwischen Lesefläche (3) und Objektivlinse (6), um das Bild auf dem mehrelementigen Bildempfänger zu erzeugen.

4. System nach Anspruch 1, **dadurch gekennzeichnet, dass** zwischen der lichtempfindlichen Fläche des mehrelementigen Bildempfängers und der Objektivlinse (6), die das Bild auf dieser Fläche erzeugt, eine transparente Platte angeordnet ist, deren Flächen umgelenkt sind von der Normalen zur Achse der Objektivlinse.

## Revendications

1. Un système d'enregistrement du dessin papillaire comprenant une source lumineuse (1), un prisme (2) fait d'un matériau optiquement transparent déterminant la position de la surface de lecture (3), un système optique, un récepteur d'image à éléments multiples et un élément optique de guidage (4) fait sous la forme d'un prisme, comprenant une surface de réfraction (41), une surface réfléchissante (42) et une surface de sortie (43),
où
la surface de lecture (3) est reliée optiquement au récepteur d'image de sorte que les rayons passant de la source lumineuse (1) à travers le prisme (2) et l'élément optique de guidage (4) vers le récepteur d'image à éléments multiples sont successivement réfractés sur la surface de réfraction (41), réfléchis sur la surface réfléchissante (42) et subissent une réflexion interne totale sur ladite surface de réfraction (41) avant de quitter l'élément optique de guidage (4) par sa surface de sortie (43).

2. Le système selon la revendication 1, **caractérisé en ce que** le système optique comprend en outre un coin optique (5).

3. Le système selon la revendication 2, **caractérisé en ce qu'**il comprend en outre une lentille de prise de vue (6) disposée de telle sorte que le coin optique (5) est situé dans le trajet optique entre la surface de lecture (3) et la lentille de prise de vue (6) pour former l'image sur le récepteur d'image à éléments multiples.

4. Le système selon la revendication 1, **caractérisé en ce qu'**entre la surface photosensible du récepteur d'image à éléments multiples et la lentille de prise de vue (6) qui forme l'image sur cette surface, se trouve une plaque transparente dont les surfaces sont déviées par rapport à la normale à l'axe de la lentille de prise de vue.
